Europäisches Patentamt

(19) European Patent Office

(11) Publication number: **0 067 327**

Office européen des brevets

**B1**

(12) **EUROPEAN PATENT SPECIFICATION**

(45) Date of publication of patent specification: **14.08.85**  (51) Int. Cl.⁴: **C 04 B 35/48, F 02 F 7/00**

(21) Application number: **82104568.9**

(22) Date of filing: **25.05.82**

(54) **Ceramic engine part with improved abrasion resistance.**

(30) Priority: **27.05.81 JP 79428/81**

(43) Date of publication of application:
**22.12.82 Bulletin 82/51**

(45) Publication of the grant of the patent:
**14.08.85 Bulletin 85/33**

(84) Designated Contracting States:
**DE GB SE**

(56) References cited:
**EP-A-0 013 599**
**EP-A-0 036 786**
**EP-A-0 066 022**

**CHEMICAL ABSTRACTS, vol. 95, no. 8, August 1981, page 292, no. 66691u, Columbus Ohio (USA);**
**CHEMICAL ABSTRACTS, vol. 93, no. 12, September 1980, page 264, no. 119051c, Columbus Ohio (USA); K. HABERKO: "Characteristics and sintering behavior of zirconia ultrafine powders"**

(73) Proprietor: **Kabushiki Kaisha Toshiba**
**72, Horikawa-cho Saiwai-ku**
**Kawasaki-shi Kanagawa-ken 210 (JP)**

(72) Inventor: **Nishida, Katsutoshi**
**6-35-16, Sasage**
**Konan-ku Yokohama-shi (JP)**
Inventor: **Ochiai, Toshihiko**
**4-37-12, Ooyabe**
**Yokosuka-shi Kanagawa-ken (JP)**
Inventor: **Inoue, Koichi**
**526 Wasedatsurumaki-cho**
**Shinjuku-ku Tokyo (JP)**
Inventor: **Kudo, Haruo**
**13-18-3, Oobuke Nishine-cho**
**Iwate-gun Iwate-ken (JP)**

(74) Representative: **Henkel, Feiler, Hänzel & Partner**
**Möhlstrasse 37**
**D-8000 München 80 (DE)**

(56) References cited:
**AMERICAN CERAMIC SOCIETY BULLETIN, vol. 55, no. 8, August 1976, pages 717-721 and 727, Columbus Ohio (USA); P.H. RIETH et al.: "Fabrication and flexural strength of ultrafine-grained yttria-stabilized zirconia"**

Courier Press, Leamington Spa, England.

## Description

The present invention relates to an engine part of the kind defined in the introductory clause of the claim.

Engine parts of this kind have been disclosed in the earlier European Patent Application EP—A—66022 which was published after the filing date of the present application.

Metal engine parts are currently used for vehicles. However, studies for using ceramic engine parts are being made in order to make an engine lighter and more efficient. However, no decisive conclusion has been made as to which ceramic is best suited for engine parts of vehicles.

It is an object of the present invention to provide an engine part which is made of a ceramic.

It is another object of the present invention to provide a ceramic engine part which is excellent in abrasion resistance.

The present inventors have made various studies and have conducted various experiments in an attempt to search for a ceramic suited for engine parts for vehicles. As a result of such studies and experiments, an yttria ($Y_2O_3$)-stabilized zirconia sintered body or a sintered body of zirconia containing, in the form of a solid solution, yttria in an amount of 0.1 to 15 mol% and, preferably 2 to 4 mol% and having predetermined surface roughness, fracture toughness, porosity and grain size was found to have excellent mechanical strength and abrasion resistance and to be suited for an engine part.

The surface of the yttria-stabilized zirconia sintered body according to the present invention has a surface roughness of 5S or less. For this reason, unnecessary surface processing need not be performed, resulting in low friction and better abrasion resistance.

The yttria-stabilized zirconia sintered body of the present invention has a fracture toughness $K_{Ic}$ of 6 to 15 MPa $\cdot$ m$^{1/2}$ and is thus best suited for engine parts.

Since the yttria-stabilized zirconia sintered body of the present invention has a porosity of 10% or less, it may be conveniently used at a part where it is brought into contact with a metal part. Abraded powder of the metal is accommodated within the micropores in the sintered body, so that an increase in the coefficient of friction may be prevented.

Since the yttria-stabilized zirconia sintered body of the present invention has a grain size of 5 μm or less, grain separation does not occur when an external force acts thereon. When the sintered body is used as an engine part, this leads to an advantage of easy prevention of a decrease in efficiency, which may otherwise be caused by an increase in the clearance due to abrasion wear.

In addition to these advantages, the yttria-stabilized zirconia sintered body of the present invention has a composite crystal system of the cubic system and the tetragonal system. A solid solution having such a crystal system does not undergo a transformation due to thermal or mechanical energy in the engine cycle and can be used as a stable engine part.

The yttria-stabilized zirconia sintered body of the present invention has a coefficient of thermal expansion which is close to those of metals.

For example, a sintered body may be provided which expands substantially linearly as a function of temperature within a temperature range of 25 to 1,300°C. This sintered body may have a coefficient of thermal expansion which is close to those of metals.

For this reason, even if the sintered body of the present invention is used together with the metal parts, damage due to heat may not be caused.

Thermal conductivity of the yttria-stabilized zirconia sintered body of the present invention can be set to 1 to 5 W/m $\cdot$ °C. Therefore, good heat insulation and combustion efficiency may be obtained when the sintered body is used as an engine part.

The mechanical strength of the yttria-stabilized zirconia sintered body can be set to be within the range of 200 to 1,500 MPa, thus satisfying the strength requirement for an engine part.

The yttria-stabilized zirconia sintered body of the present invention has a thermal shock resistance such that a critical thermal shock temperature difference (ΔTc) is 300 to 500°C. The sintered body can be used for an engine part which is subjected to a great temperature gradient.

The sintered body has a Young's modulus as small as 150 to 250 GPa which is close to those of metal engine parts. The sintered body of the present invention thus provides excellent compatibility with metal engine parts.

The yttria-stabilized zirconia sintered body has a density as high as 5.3 to 6,2×10$^3$ kg/m$^3$. This results in a good abrasion resistance, a longer service life and better reliability of the engine when the sintered body is used as an engine part.

The yttria-stabilized zirconia sintered body as described above has an excellent specific wear volume of $1 \times 10^{-6}$ mm$^3$/kgf $\cdot$ mm or less when it is subjected to an abrasion resistance test with a steel member under lubrication. When the sintered body is used as a tappet, an opening or closing timing delay of the valve may not be caused even after a prolonged period of time. Since the sintered body does not react with metals, it can withstand sliding movement over a long period of time.

The yttria-stabilized zirconia sintered body has a coefficient of friction of 0.7 or less with a steel member. Therefore, energy loss due to friction may be reduced to the minimum, and the combustion efficiency may be improved.

Sintered bodies of zirconia are generally reinforced by ageing. However, when a sintered body of zirconia contains yttria in the form of a solid solution, reinforcement may be achieved only by sintering and does not require ageing. For this reason, drawbacks of the engine parts such as deformation due to the ageing or non-uniform precipitation by non-uniform heat treatment may be prevented. The sintered body of the present invention is moreover preferable in that the additional step such as ageing is not required.

When the yttria-stabilized zirconia sintered body of the present invention is subjected to a processing of a relatively great surface roughness instead of repeated processing of a relatively small surface roughness as in the other ceramics, degradation in the mechanical strength is not caused. For this reason, the processing may be performed faster, and a sintered body of desired shape may be manufactured fast, resulting in industrial advantage. The sintered body of the present invention allows various types of processing such as diamond and stone grinding, ultrasonic processing, and laser processing.

The mechanical strength of the yttria-stabilized zirconia sintered body can be set to be higher than that of an alumina-type ceramic and is suitably adapted for an engine part which is subjected to more severe conditions than those other ceramics can withstand.

The yttria-stabilized zirconia sintered body of the present invention is chemically stable, is easy to handle with, and does not impose a special requirement on assembly of the engine parts.

Since the yttria-stabilized zirconia sintered body is an oxide, it is excellent in oxidation resistance and is thus preferable as an engine part.

The yttria-stabilized zirconia sintered body of the present invention is most preferably manufactured by precipitating a coprecipitate of zirconium and yttrium from a solution containing zirconium ions and yttrium ions, drying the coprecipitate at a low temperature to provide a mixture containing zirconia and yttria, and sintering the mixture.

This invention can be more fully understood from the following detailed description when taken in conjunction with the accompanying drawing, in which:

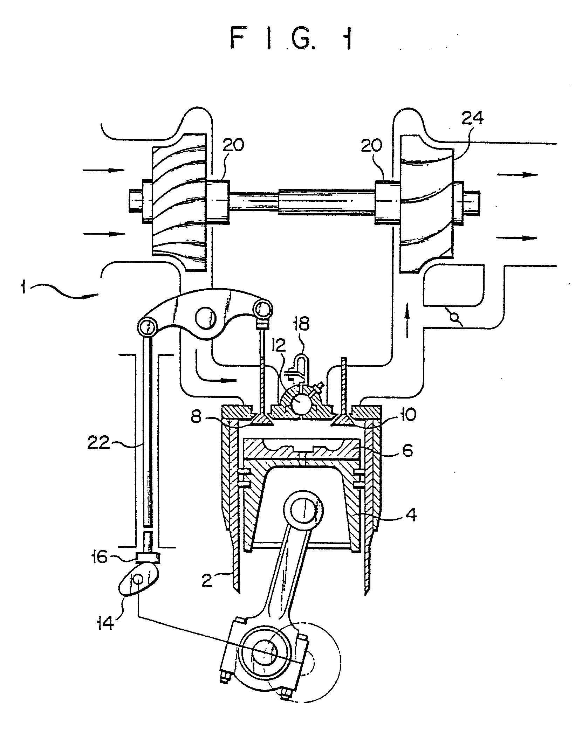

Fig. 1 shows an engine of a vehicle.

As has been described above, an yttria-stabilized zirconia sintered body consists of yttria and zirconia. Yttria is contained in the amount of 0.1 to 15 mol% and preferably 2 to 4 mol%.

An engine part must have a good abrasion resistance.

In order to satisfy this requirement, the yttria-stabilized zirconia sintered body has a surface roughness of 5S or less and preferably 2S or less, a fracture toughness of 6 to 15 $MPa \cdot m^{1/2}$ and preferably 8 to 15 $MPa \cdot m^{1/2}$, a porosity of 10% or less and preferably 1% or less, and a grain size of 5 μm or less and preferably 2 μm or less.

The yttria-stabilized zirconia sintered body is most preferably manufactured in the manner to be described below. First, an yttrium compound, which may be converted into an oxide upon heating, such as yttrium nitrate, is mixed with a zirconium compound, which may also be converted into an oxide upon heating, such as zirconyl chloride, in such a manner that yttria is contained in a predetermined ratio in the final oxide product. The mixture obtained is dissolved in a hydrochloric acid solution and is mixed well. Ammonia is added to this solution to precipitate a coprecipitate containing zirconium and yttrium. The coprecipitate is dried at a low temperature of 150 to 400°C to prepare a mixture containing $ZrO_2$ and $Y_2O_3$. The mixture is pulverized, is formed into a predetermined shape at a pressure of 300 to 2000 kg/cm² by an isotactic press (e.g., a rubber press), and is sintered at a temperature of 1450 to 1650°C.

The crystal system of the sintered body thus obtained is mainly comprised of a composite crystal system of the cubic system and the tetragonal system. Monoclinic system may be present in a small amount.

The sintered body thus obtained is processed by diamond grinding, laser processing or the like to provide a desired engine part.

In order to provide an engine part of better quality, the sintered body of the present invention has one or more of the properties to be shown below:

**0 067 327**

|  | General range | Preferable range |
|---|---|---|
| Coefficient of thermal expansion | $8-13\times10^{-6}/°C$ | $9-11\times10^{-6}/°C$ |
| Thermal conductivity | $1-5$ W/m · °C | $1.5-3$ W/m · °C |
| Flexural strength | $200-1500$ MPa | $600-1500$ MPa |
| Critical thermal shock temperature difference | $300-500°C$ | — |
| Young's modulus | $150-250$ GPa | $180-250$ GPa |
| Density | $5.3-6.2\times10^3$ kg/m$^3$ | $6.0-6.2\times10^3$ kg/m$^3$ |
| Specific wear volume with steel member under lubrication | $1\times10^{-6}$ mm$^3$/kgf · mm or less | $1\times10^{-8}$ mm$^3$/kgf · mm or less |
| Coefficient of friction with a metal member | 0.7 or less | 0.5 or less |

The sintered body of the present invention may be conveniently used for a suction valve 8, an exhaust valve 10, a precombustion chamber 12, a cam 14, a tappet 16, a fuel injection pump 18, a bearing 20 or a push rod 22, as shown in Fig. 1.

Examples

Zirconyl chloride and yttrium nitrate were mixed such that the final oxide may contain yttria in the amount indicated in Table below. After the mixture obtained is dissolved in a hydrochloric acid solution and is well mixed, ammonia was added to the solution to prepare a coprecipitate containing zirconium and yttrium. The coprecipitate was dried at a low temperature to prepare a $ZrO_2-Y_2O_3$ containing mix. The mix was pulverized and then was formed into a pressed product with an isotactic press. The pressed product was sintered in the air at 1,550°C to provide a sintered body. The sintered body was subjected to various tests shown in Table below. The results are summarized in the table below.

4

| Sample No. | Mixing ratio (Molar) | | Crystal system | α | Thermal conductivity | Flexural strength |
|---|---|---|---|---|---|---|
| | ZrO₂ | Y₂O₃ | | ×10⁻⁶/°C | W/m · °C | MPa |
| 0 | 97.5 | 2.5 | Cubic+ Tetragonal+ Monoclinic | 8.2 | 1.5 | 420 |
| 1 | 97.5 | 2.5 | Cubic+ Tetragonal+ Monoclinic | 9.0 | 1.8 | 650 |
| 2 | 97.5 | 2.5 | Cubic+ Tetragonal+ Monoclinic | 9.3 | 1.9 | 700 |
| 3 | 97.5 | 2.5 | Cubic+ Tetragonal+ Monoclinic | 9.5 | 2 | 760 |
| 4 | 97 | 3.0 | Cubic+ Tetragonal | 10.0 | 1.6 | 400 |
| 5 | 97 | 3.0 | Cubic+ Tetragonal | 10.2 | 1.8 | 850 |
| 6 | 97 | 3.0 | Cubic+ Tetragonal | 10.5 | 2 | 950 |
| 7 | 96 | 4.0 | Cubic+ Tetragonal | 10.6 | 1.8 | 650 |
| 8 | 96 | 4.0 | Cubic+ Tetragonal | 10.7 | 1.9 | 630 |
| 9 | 95 | 5.0 | Cubic | 11.1 | 1.8 | 220 |
| 10 | 92 | 8.0 | Cubic | 10.9 | 1.7 | 320 |
| 11 | 90 | 10.3 | Cubic | 11.2 | 1.9 | 330 |
| 12 | 97 | 3 | Cubic+ Monoclinic | 7.6 | 1.8 | 230 |

$Y_2O_3$
$ZrO_2$

| Sample No. | Fracture toughness ($K_{IC}$) | ΔTc | Young's modulus | Grain size | Porosity | ρ | Specific wear volume | Coefficient of friction |
|---|---|---|---|---|---|---|---|---|
| | MPa√m | °C | GPa | μ | % | kg/m³ | mm³/kgf · mm | |
| 0 | 4.5 | 500 | 175 | 0.9 | 15 | 5.2 | $3 \times 10^{-6}$ | 0.7 |
| 1 | 6 | 360 | 190 | 0.8 | 9 | 5.5 | $9 \times 10^{-8}$ | 0.6 |
| 2 | 6.8 | 360 | 210 | 1.1 | 4 | 5.8 | $2 \times 10^{-9}$ | 0.6 |
| 3 | 8 | 350 | 212 | 0.8 | 0.2 | 6.05 | $3 \times 10^{-10}$ | 0.5 |
| 4 | 4.2 | 460 | 180 | 1.2 | 14 | 5.2 | $6 \times 10^{-6}$ | 0.7 |
| 5 | 9.2 | 360 | 210 | 0.9 | 5 | 5.8 | $9 \times 10^{-10}$ | 0.6 |
| 6 | 9.6 | 360 | 215 | 0.9 | 1 | 6.0 | $1 \times 10^{-10}$ | 0.5 |
| 7 | 7.5 | 355 | 208 | 1.5 | 5 | 5.8 | $3 \times 10^{-9}$ | 0.5 |
| 8 | 6.8 | 350 | 209 | 2.0 | 5 | 5.8 | $6 \times 10^{-9}$ | 0.5 |
| 9 | 3 | 230 | 210 | 7 | 5 | 5.8 | $5 \times 10^{-6}$ | 0.7 |
| 10 | 4.8 | 340 | 206 | 2.0 | 9 | 5.8 | $2 \times 10^{-6}$ | 0.6 |
| 11 | 4.6 | 320 | 210 | 4.0 | 1 | 6.0 | $2 \times 10^{-6}$ | 0.5 |
| 12 | 3.5 | 260 | 208 | 6 | 5 | 5.8 | $3 \times 10^{-6}$ | 0.6 |

Methods of measurements:
1. Crystal system: X-ray diffractometry
2. Thermal conductivity: Laser flash method
3. Flexural strength: Sample size—3×3×40 mm
   Measuring conditions: Three-point method Span—20 mm, Load Application speed—1.05 mm/min, Temperature—Room Temperature
4. Fracture toughness: Vicker's indentation method
5. Young's modulus: Ultrasonic method
6. ρ: Arkimedes method
7. Specific wear volume & coefficient of friction: Ring on flat type method
   Measuring conditions: Ring—S45C steel (rotary piece, 1,300 rpm), Flat—sintered body sample, Load—30 kg (dead weight), Lubricant—Engine oil.

Tappets were made from samples No. 1 and No. 6, and a rig-test was conducted using these tappets and cams made of S45C stainless steel. The test was performed under the fame conditions as the conditions in the actual engine operation for 1 hour. Similar specific wear volumes were obtained to those indicated in the above table.

**Claim**

An engine part comprising at least partially a sintered body which mainly consists of zirconia and yttria, yttria being contained in the sintered body in an amount of 0,1 to 15 mol% with respect to the total of zirconia and yttria, and which has a surface roughness of not greater than 5S, a fracture toughness $K_{IC}$ of 6 to 15 MPa · m$^{1/2}$, a porosity of not greater than 10%, and a grain size of not greater than 5 μm, wherein the sintered body is prepared by precipitating a coprecipitate of zirconium and yttrium from a solution containing zirconium and yttrium ions, drying the coprecipitate at a low temperature to prepare a mixture containing zirconia and yttria, and sintering the mixture, characterized in that the engine part is a suction valve, an exhaust valve, a fuel sub-chamber, a cam, a tappet, a fuel injection pump, a bearing or a push rod.

# 0 067 327

**Patentanspruch**

(Brennkraft-)Maschinenteil aus zumindest teilweise einem Sinterkörper, der hauptsächlich aus Zirkonoxid und Yttriumoxid besteht, wobei Yttriumoxid im Sinterkörper in einer Menge von 0,1—15 Mol-%, bezogen auf die Gesamtmenge an Zirkon- und Yttriumoxid, erhalten ist, und der eine Oberflächenrauhigkeit von nicht größer als 5S, eine Rißzähigkeit $K_{IC}$ von 6—15 MPa $\cdot$ m$^{1/2}$, eine Porosität von nicht mehr als 10% und eine Korngröße von nicht mehr als 5 μm aufweist, wobei der Sinterkörper durch Ausfällen eines Kopräziptats aus Zirkon und Yttrium aus einer Zirkon- und Yttriumionen enthaltenden Lösung, Trocknen des Kopräzipitats bei niedriger Temperatur zwecks Bereitung eines Zirkonoxid und Yttriumoxid enthaltenden Gemisches und Sintern des Gemisches hergestellt (worden) ist, dadurch gekennzeichnet, daß der Maschinenteil ein Einlaßventil, ein Auslaßventil, eine Kraftstoff-Vorkammer, ein Nocken, ein (Ventil-)Stößel, eine Kraftstoff-Einspritzpumpe, ein Lager oder eine (Ventil-)Stoßstange ist.

## Revendication

Une pièce pour moteur comprenant au moins en partie un corps vitrifié étant surtout composé de la zircone et de l'oxyde d'yttrium, où l'oxyde d'yttrium est contenu dans le corps vitrifié en une quantité de 0,1 à 15 pour-cent moléculaire quant à tout de zircone et d'oxyde d'yttrium, et présentant une rudesse superficielle pas plus grande que 5S, une résistance à la rupture $K_{IC}$ de 6 à 15 MPa×m$^{1/2}$, une porosité pas plus grande que 10 pour-cent et une grosseur des grains pas plus grande que 5 μm, où le corps vitrifié est préparé en précipitant un co-précipité de la zircone et de l'oxyde d'yttrium à partir d'une solution contenant des ions de zirconium et d'yttrium, en étuvant le co-précipité à une température basse pour la préparation d'un mélange contenant de zircone et d'oxyde d'yttrium et en vitrifiant ledit mélange, caractérisée en ce que la pièce pour moteur est une soupape d'aspiration, une soupape d'échappement, une chambre de précombustion, une poulie à excentrique, une came, une pompe à injection de carburant, un palier ou une bielle.

7

# F I G. 1